# EUROPEAN PATENT SPECIFICATION

(11) **EP 4 029 224 B1**
(45) Date of publication and mention of the grant of the patent: **30.10.2024**
(21) Application number: 20704254.0
(22) Date of filing: 06.02.2020
(51) Int. Cl.: H04L 61/2521, H04L 61/5014, H04L 101/659, H04L 101/668, H04L 101/677

(54) **VIRTUAL ADDRESS ALLOCATION TO PREVENT CONFLICTS IN MULTI-NETWORK ENVIRONMENTS**
ZUWEISUNG VIRTUELLER ADRESSEN ZUM VERMEIDEN VON KONFLIKTEN IN UMGEBUNGEN MIT MEHREREN NETZWERKEN
ATTRIBUTION D'ADRESSES VIRTUELLES POUR EMPÊCHER DES CONFLITS DANS DES ENVIRONNEMENTS À RÉSEAUX MULTIPLES

(43) Date of publication of application: 20.07.2022
(73) Proprietor: Huawei Cloud Computing Technologies Co., Ltd., Guizhou 550025 (CN)
(72) Inventor: ANSON, Omer, 80992 Munich (DE); BEREZOVSKY, Irena, 80992 Munich (DE); OFEK, Itamar, 80992 Munich (DE)
(74) Representative: Gill Jennings & Every LLP
(86) International application number: PCT/EP2020/052958
(87) International publication number: WO 2021/155928

(56) References cited:
- US-A1- 2011 320 821
- BLANCHET VIAGENIE P SEITE FRANCE TELECOM-ORANGE M: "Multiple Interfaces and Provisioning Domains Problem Statement; rfc6418.txt", MULTIPLE INTERFACES AND PROVISIONING DOMAINS PROBLEM STATEMENT; RFC6418.TXT, INTERNET ENGINEERING TASK FORCE, IETF; STANDARD, INTERNET SOCIETY (ISOC) 4, RUE DES FALAISES CH- 1205 GENEVA, SWITZERLAND, 22 November 2011 (2011-11-22), pages 1 - 22, XP015081363
- INTERNET ENGINEERING TASK FORCE R BRADEN ET AL: "Requirements for Internet Hosts -- Communication Layers; rfc1122.txt", REQUIREMENTS FOR INTERNET HOSTS -- COMMUNICATION LAYERS; RFC1122.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 October 1989 (1989-10-01), XP015006065
- KINNEAR R JOHNSON M STAPP CISCO SYSTEMS K: "Virtual Subnet Selection Options for DHCPv4 and DHCPv6; rfc6607.txt", VIRTUAL SUBNET SELECTION OPTIONS FOR DHCPV4 AND DHCPV6; RFC6607.TXT, INTERNET ENGINEERING TASK FORCE, IETF; STANDARD, INTERNET SOCIETY (ISOC) 4, RUE DES FALAISES CH- 1205 GENEVA, SWITZERLAND, 30 April 2012 (2012-04-30), pages 1 - 26, XP015081520

## Description

### BACKGROUND

Networked environments are the cornerstone for numerous platforms, systems, services and applications in the modern world.

The networks may be highly dynamic with network nodes continuously connecting and disconnecting from the network requiring automated methods and systems as known in the art to map the network nodes in the network, for example, Dynamic Host Configuration Protocol (DHCP) systems, Internet Key Exchange (IKE), Wi-Fi Protected Access (WPA) and/or the like.

The challenge to effectively and uniquely assign network addresses to the network nodes may significantly increase for network nodes connected simultaneously to a plurality of networks (multi-network nodes) which may be separated from each other and independently controlled such that conflicts may arise when mapping the multi-network nodes in the different networks.

Blanchet et al. "Multiple Interfaces and Provisioning Domains Problem Statement; rfc6418.txt", IETF discloses issues encountered by a node attached to multiple provisioning domains.

Braden et al. "Requirements for Ineternet Hosts - Communication Layers; rfc1122.txt", IETF defines and discusses the requirements for Internet host software. It covers the communications protocol layers: link layer, IP layer, and transport layer; its companion RFC-1123 covers the application and support protocols.

### SUMMARY

An objective of the embodiments of the present disclosure is to provide a solution which mitigates or solves the drawbacks and problems of conventional solutions.

The above and further objectives are solved by the subject matter of the independent claims. Further advantageous embodiments can be found in the dependent claims.

The present disclosure aims at providing a solution for automatically supporting network connection for one or more network nodes connected to one or more other networks by creating a virtual sub-network for each multi-network node and assigning it a virtual network address in the virtual sub-network such that the virtual network address does not conflict (collide) with network addresses assigned to the multi-network node in the other network(s).

Other systems, methods, features, and advantages of the present disclosure will be or become apparent to one with skill in the art upon examination of the following drawings and detailed description.

Unless otherwise defined, all technical and/or scientific terms used herein have the same meaning as commonly understood by one of ordinary skill in the art to which the present disclosure pertains. Although methods and materials similar or equivalent to those described herein can be used in the practice or testing of embodiments of the present disclosure, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the present disclosure can involve performing or completing selected tasks manually, automatically, or a combination thereof. Moreover, according to actual instrumentation and equipment of embodiments of the method and/or system of the present disclosure, several selected tasks could be implemented by hardware, by software or by firmware or by a combination thereof using an operating system.

For example, hardware for performing selected tasks according to embodiments of the present disclosure could be implemented as a chip or a circuit. As software, selected tasks according to embodiments of the present disclosure could be implemented as a plurality of software instructions being executed by a computer using any suitable operating system. In an exemplary embodiment of the present disclosure, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE SEVERAL VIEWS OF THE DRAWINGS

Some embodiments of the disclosure are herein described, by way of example only, with reference to the accompanying drawings. With specific reference now to the drawings in detail, it is stressed that the particulars shown are by way of example and for purposes of illustrative discussion of embodiments of the disclosure. In this regard, the description taken with the drawings makes apparent to those skilled in the art how embodiments of the disclosure may be practiced.

In the drawings:

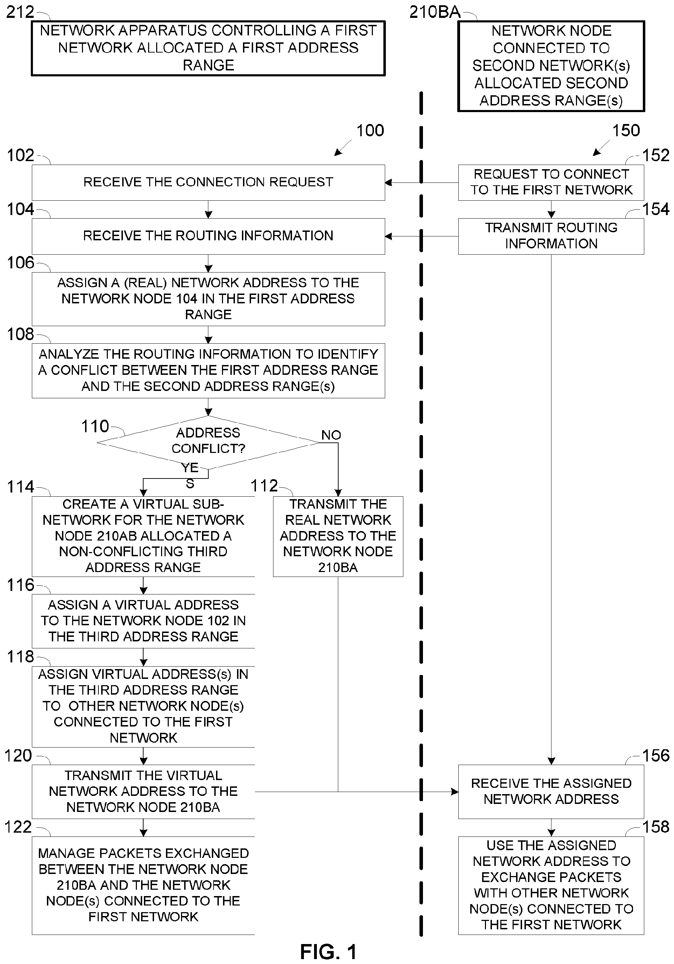

FIG. 1 is a flow chart of an exemplary process of creating a virtual sub-network to assign a non-conflicting network address to a network node connected to a plurality of networks based on routing information received from the network node, according to some embodiments of the present disclosure;

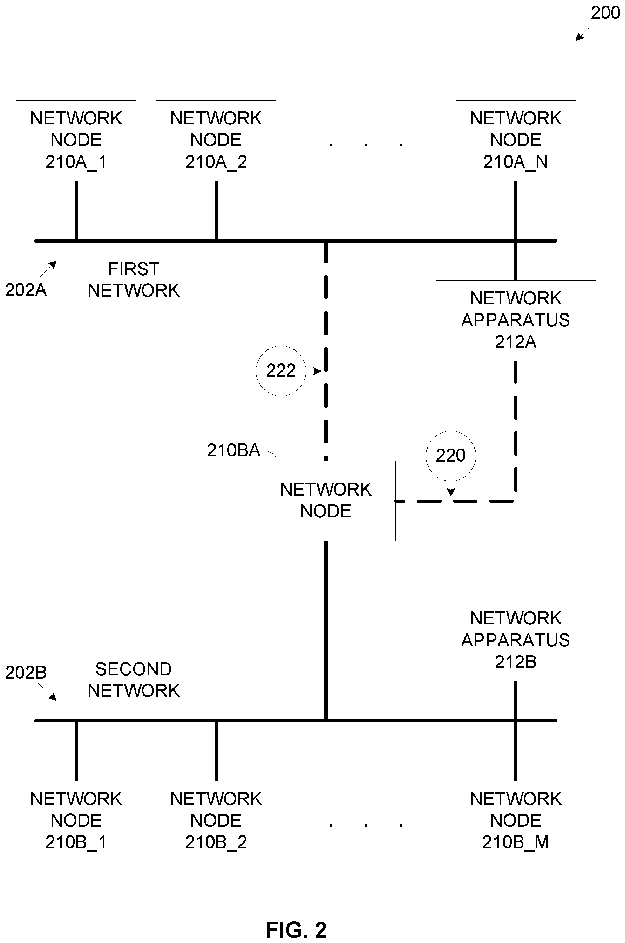

FIG. 2 is a schematic illustration of an exemplary networked system for creating a virtual sub-network to assign a non-conflicting network address to a network node connected to a plurality of networks based on routing information received from the network node, according to some embodiments of the present disclosure;

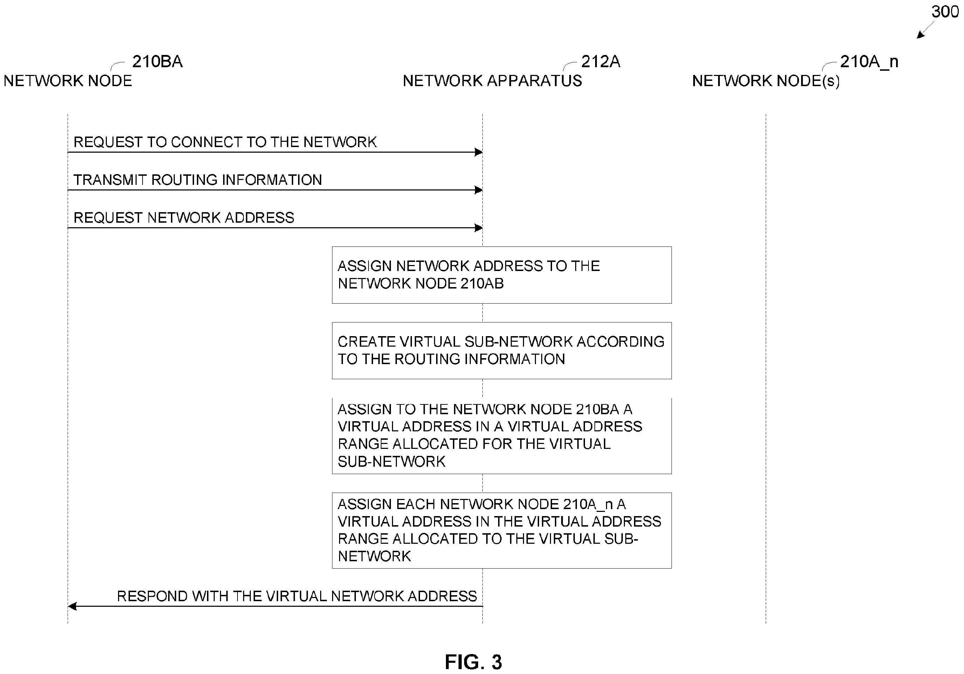

FIG. 3 is a schematic illustration of an exemplary networked system for creating a virtual sub-network to assign a non-conflicting IP address to a network node connected to a plurality of networks based on routing information received from the network node, according to some embodiments of the present disclosure;

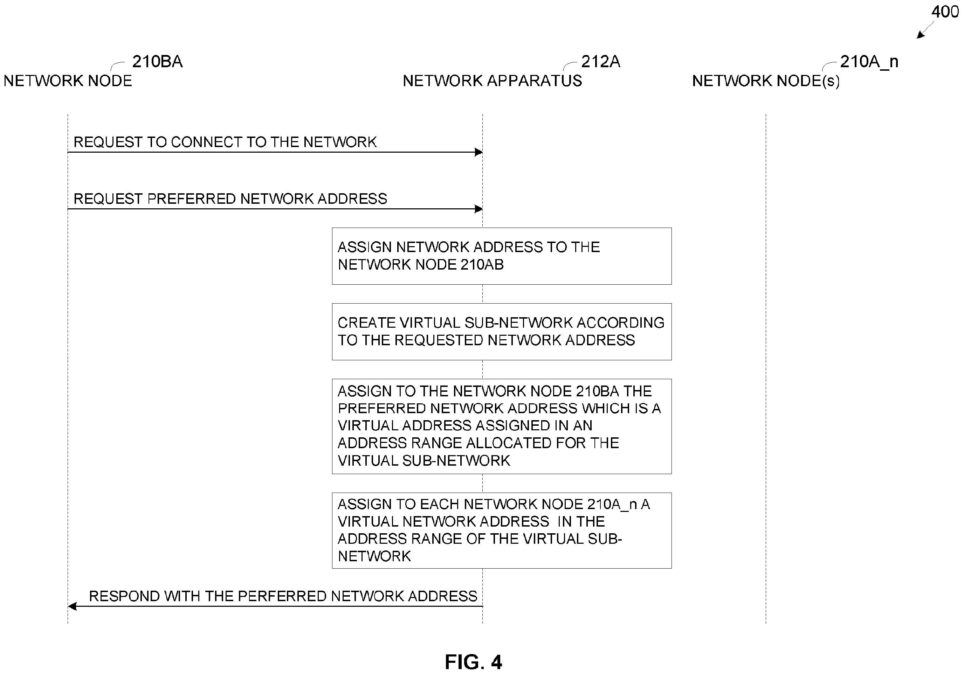

FIG. 4 is a schematic illustration of an exemplary sequence for creating a virtual sub-network to assign a non-conflicting network address to a network node connected to a plurality of networks according to a preferred network address requested by the network node, according to some embodiments of the present disclosure;

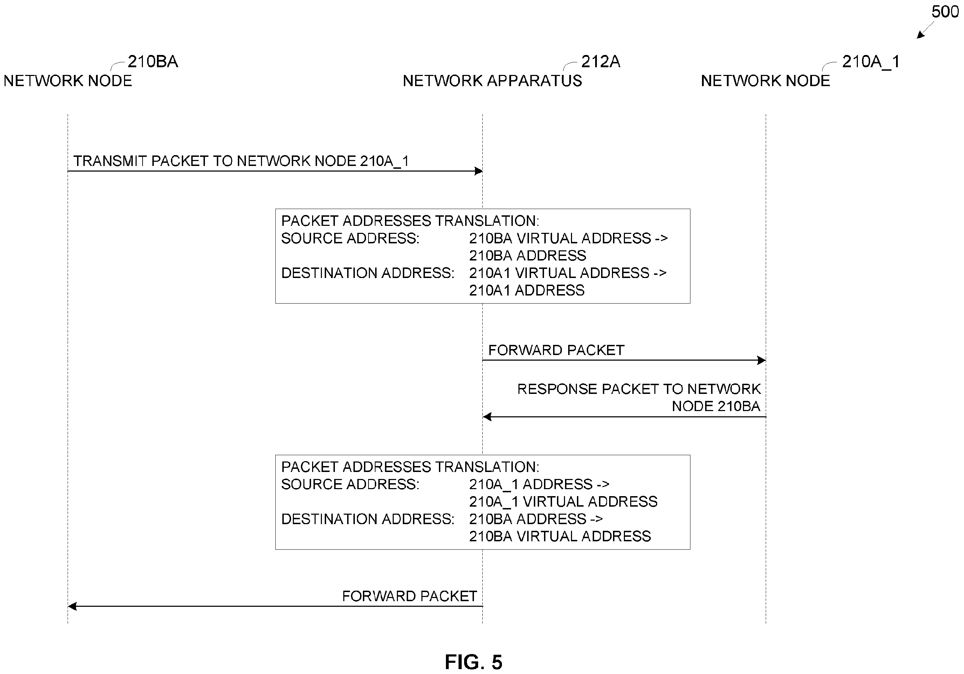

FIG. 5 is a schematic illustration of an exemplary sequence for managing network traffic packets exchanged between network nodes via a virtual sub-network created to assign a non-conflicting network address to a network node connected to a plurality of networks, according to some embodiments of the present disclosure; and

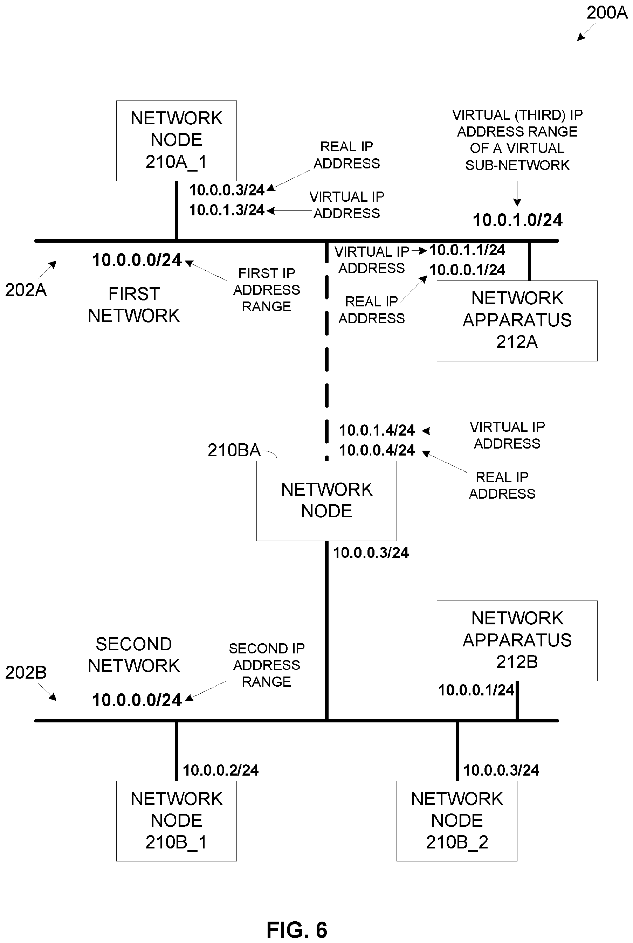

FIG. 6 is a schematic illustration of an exemplary networked system applying IP addresses for creating a virtual sub-network to assign a non-conflicting network address to a network node connected to another network, according to some embodiments of the present disclosure.

### DETAILED DESCRIPTION

The present disclosure, in some embodiments thereof, relates to allocating network addresses to network nodes connected to a network and, more specifically, but not exclusively, to allocating virtual network addresses to network nodes connected to a plurality of networks in a virtual sub-network established over the network for the multi-network nodes to avoid network address conflicts.

The present disclosure presents devices, systems and methods for creating virtual sub-networks over a first network for (multi-)network nodes requesting to connect to the first network while connected to one or more other (second) networks which are separated from the first network and independently managed. The virtual sub-networks are created based on routing information received from the multi-network nodes in order to assign network addresses to the multi-network nodes such that the network addresses assigned on the first network do not conflict with the network addresses assigned to these multi-network nodes on the second networks.

Each multi-network node which may include physical devices, for example, a server, a computer, a mobile device and/or the like as well as virtual nodes, for example, a Virtual Machine (VM) and/or the like instantiated over one or more physical devices may connect to the first network and the second network(s) via different network interfaces available to the multi-network node.

Modem networks whether physical and/or virtual are typically based on one or more addressing schemes as known in the art in which each network node connected to the network is assigned a unique network address which is used to uniquely and distinctively identify each of the connected network nodes in order to enable the network nodes to exchange packets over the network. Each network is typically allocated a network address range (e.g. IP address range) and each network node connected to the network is assigned a network address (e.g. IP address) within the network address range allocated for the network.

The address allocation and assignment is mostly automatically conducted by one or more network apparatuses configured to automatically assign a network address to each network node which connects to the network. The network apparatus may be a physical or a virtual entity utilized by one or more devices, software implemented modules, dedicated circuits and/or combination thereof, for example, a server, a Dynamic Host Configuration Protocol (DHCP) server, a gateway, a router a switch, a virtual switch and/or the like.

As stated heroin before, the first network and the second network(s) to which a multi-network node is connected or attempts (requests) to connect are separated from each other and independently managed, for example, controlled by independent network apparatuses which are unaware of each other and/or un-synchronized with each other with respect to network address allocation. The first network and the second network(s) may therefore be allocated with conflicting (colliding, overlapping) address ranges.

As such the network address assigned to the multi-network node, specifically to one network interface of the multi-network node in the first network may conflict (collide) with the network address assigned to the multi-network node, specifically to other network interface of the multi-network nodes in one of the second network(s). The address conflict may obviously lead to conflict in the internal network data routing of the multi-network node which be unable to distinguish between packets transmitted/received on the first network and the respective second network. This may lead to degrade network connectivity and potentially complete inability of the multi-network node to communicate over one or more of the first and/or second network.

First, some of the existing methods, specifically automated network management systems may present major limitations and may be potentially unable to automatically assign network address to multi-network nodes which are connected to multiple separated networks such that there are no addressing conflicts (collisions). Creating the virtual sub-network on the other hand may resolve all such potential address conflicts as each multi-network node is assigned virtual network address which is determined not to conflict with other network address(s) assigned to the respective multi-network node in the other networks(s) it is connected to.

Moreover, some of the existing systems and methods may be based on manual configuration of the network addresses allocated for the plurality of different networks in order to prevent address conflicts. Such manual configuration may involve major effort and may be extremely time consuming. Moreover, since modem networks are highly dynamic with network nodes continuously connecting and disconnecting, manual configuring these network nodes may be inefficient, impractical and typically unfeasible. In contrast, automatically establishing virtual sub-networks over the network for the multi-network nodes and assigning them virtual network addresses may enable automatic adaptation to any network configuration change and is thus highly suitable for the dynamically changing modem networks.

Furthermore, the ever growing deployment of network infrastructure and networked services may lead to network nodes frequently connecting to multiple separated networks. Therefore, dynamically and automatically connecting such multi-network nodes to the network while preventing network addressing conflicts may significantly improve connectivity and functionality of such networks in general and such multi-network nodes in particular.

In addition, since the other network node(s) connected to the network are unaware and oblivious to the virtual sub-network(s) established over the network for the multi-network node(s) and may communicate with the multi-network node(s) using the real network addresses which are normally used in the network, the other network node(s) may require no modifications, alterations and/or adjustments to enable them to communicate with the multi-network node(s). The virtual mapping over the virtual sub-networks may be therefore easily deployed in existing networks requiring only the network apparatus to support the virtual mapping of the virtual sub-networks created for the multi-network nodes. This may significantly reduce, complexity, cost, resources and/or cost for automatically supporting connection of multi-network nodes to the network while avoiding address conflicts to ensure full functionality of the network.

Before explaining at least one embodiment of the disclosure in detail, it is to be understood that the disclosure is not necessarily limited in its application to the details of construction and the arrangement of the components and/or methods set forth in the following description and/or illustrated in the drawings and/or the Examples. The disclosure is capable of other embodiments or of being practiced or carried out in various ways.

As will be appreciated by one skilled in the art, aspects of the present disclosure may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer program code comprising computer readable program instructions embodied on a computer readable medium may be transmitted using any appropriate medium, including but not limited to wireless, wire line, optical fiber cable, RF, etc., or any suitable combination of the foregoing.

The computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

The computer readable program instructions for carrying out operations of the present disclosure may be may be written in any combination of one or more programming languages, such as, for example, assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions.

The flowcharts and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Reference is now made to FIG. 1, which presents flow charts of exemplary processes of creating a virtual sub-network to assign a non-conflicting network address to a network node connected to a plurality of networks based on routing information received from the network node, according to some embodiments of the present disclosure.

It should be noted that network address conflict is also known as network address collision and the two terms may be used interchangeably throughout this document.

An exemplary process 150 may be executed by a network node 210, for example, a server, a computer, a mobile device and/or the like, specifically a multi-network node 210BA requesting to connect to a first network while connected to a one or more other (second) networks which are separated and independently controlled (managed) from the first network.

An exemplary process 100 may be executed by a network apparatus 212, for example, a gateway, a switch, a network node, a server and/or the like controlling a (first) network to assign a network address (e.g. IP address) to the multi-network node 210BA requesting to connect to the first network while connected to the second network(s) such that the assigned network address does not conflict with the network address(s) assigned to the multi-network node 210BA on the second network(s).

To this end the network apparatus 212 first analyses routing information received from the network node 210 which may comprise network mapping (networking addressing) of the multi-network node 210BA such as, for example, the network address(s) assigned to the multi-network node 210BA on the second network(s).

In case there is no conflict between a network address range (space) of the first network and the network addresses assigned to the multi-network node 210BA in the second network(s), the network apparatus 212 may simply assign the multi-network node 210BA a real network address (e.g. IP address) in the network address range allocated to the first network. The term real network address refers to a network address which is not manipulated and is assigned in the address range originally applied for mapping network nodes in the first network. The multi-network node 210BA may use the received real (basic) network address to communicate with one or more other network nodes 210 connected to the first network.

However, in case of a network addressing (mapping) conflict between a network address range (space) of the first network and the network address range allocated in one or more of the second network(s), the network apparatus 212 creates a virtual sub-network for the multi-network node 210BA over the first network. The network apparatus 212 allocates to the virtual sub-network a network address range which, based on analysis of the routing information, does not conflict with the network addresses allocated to the multi-network node 210BA on the second network(s). The network apparatus 212 then assigns a virtual address (e.g. IP address) to the multi-network node 210BA in the address space of the virtual sub-network and further assigns a virtual address in the virtual sub-network to one or more of the other network nodes 210 connected to the first network.

In addition to the virtual address, the network apparatus 212 assigns the multi-network node 210BA the real network address in the network address space of the first network which may be used by one or more of the other network nodes 210 connected to the first network to access the network node 210.

As such after the virtual sub-network is created, the multi-network node 210BA uses the virtual addresses assigned in the virtual sub-network for communicating with the other network node(s) 210 connected to the first network. The other network node(s) 210 however, are completely unaware of the virtual sub-network and use the real network address assigned to the multi-network node 210BA to communicate with it such no change and/or adjustment is required for the other network node(s) 210 to enable connection of the multi-network node 210BA to the first network.

The communication, i.e., the network traffic packets exchanged between the multi-network node 210BA and the other network node(s) 210 connected to the first network via the virtual sub-network established over the first network are controlled (managed) by the network apparatus 212A which translates the virtual addresses to the respective real network addresses and vice versa.

The network apparatus 212A may further provide one or more services to the network nodes 210 connected to the first network including the multi-network node 210BA, for example, network discovery services, DNS services, HTTP response services, Ad-hoc connectivity services and/or the like to support communication between the network nodes 210 connected to the first network and to the virtual sub-network established over the first network. communication, i.e., the network traffic packets exchanged between the multi-network node 210BA and the other network node(s) 210 connected to the first network via the virtual sub-network established over the first network may be controlled (managed) by the network apparatus 212 which may translate the virtual addresses to the respective real network addresses and vice versa.

Reference is now made to FIG. 2, which is a schematic illustration of an exemplary networked system for creating a virtual sub-network to assign a non-conflicting network address to a network node connected to a plurality of networks based on routing information received from the network node, according to some embodiments of the present disclosure.

An exemplary networked system 200 comprises a first network 202A and a second network 202B which may each include a wired and/or wireless network, for example, a Local Area Network (LAN), a Wide Area Network (WAN), a Municipal Area Network (MAN), a Wireless LAN (WLAN, e.g., Wi-Fi), a cellular network and/or the like which may be utilized by one or more physical networks and/or virtual networks such as, for example, a Software Defined Network (SDN) and/or the like.

Each of the networks 202 may be managed by a respective network apparatus 212, for example, a gateway, a switch, a network node, a server, a Dynamic Host Configuration Protocol (DHCP) server and/or the like, specifically the first network 202A may be managed by a network apparatus 212A and the second network 202B may be managed by a network apparatus 212B.

The first network 202A and the second network 202B are separated of each other and independently managed by their respective network apparatuses 212A and 212B such that they are oblivious to each other. In particular, the network apparatuses 212A and 212B may be unaware and therefore unsynchronized with respect to the network mapping applied in each of the first network 202A and the second network 202B, for example, the network addresses assigned to one or more network nodes 210 which are connected to the first network 202A and/or to the second network 202B.

The network nodes 210 may include, for example, a server, a computer, a mobile device (e.g. laptop, Smartphone, tablet, etc.) and/or the like. The network nodes 210 may further include one or more virtual network nodes such as, for example, a Virtual Machine (VM) and/or the like instantiated on one or more of physical network nodes 210 and optionally managed by one or more virtual switches, for example, an Open vSwitch (OVS) and/or the like. For example, one or more network nodes 210A_n may be connected to the first network 202A, for example, a network node 210A_1, a network node 210A_2 through a network node 210A_N and one or more network nodes 210B_mmay be connected to the second network 202B, for example, a network node 210B_1, a network node 210B_2 through a network node 210B_M.

Moreover, one or more network nodes 210 having multiple network interfaces (physical and/or logical) may connect and/or attempt to connect to a plurality of networks 202 each via a respective one of the multiple network interfaces. For example, a multi-network node 210BA which is connected to the second network 202B via one network interface may connect or request to connect to the first network 202A via another network interface.

The multi-network node 210BA may connect to the first network 202A and/or to the second network 202B via the respective network apparatus 212, i.e., via the network apparatus 212A for the first network 202A and the network apparatus 212B for the second network 202B serving as a gateway and/or a switch for the multi-network node 210BA. For example, as shown at 220, the multi-network node 210BA may connect to the first network 202A via the network apparatus 212A which may include multiple network interfaces to connect the network nodes 210A_n and to the multi-network node 210BA.

Additionally, and/or alternatively, the multi-network node 210BA may connect to the first network 202A and/or to the second network 202B via another network apparatus 212 serving as a gateway and/or a switch for the multi-network node 210BA. For example, as shown at 222, the multi-network node 210BA may connect to the first network 202A via another network apparatus 212 while the network apparatus 212A is also connected to the first network 202A in parallel to the multi-network node 210BA.

The network apparatus 212 may optionally comprise one or more processors (homogenous or heterogeneous) arranged for parallel processing, as clusters and/or as one or more distributed core processing units and a storage for storing code (program store) and/or data. The processor(s) may execute one or more software modules, for example, a process, a script, an application, an agent, a utility, a tool, an Operating System (OS), a service, a plug-in, an add-on and/or the like, each comprising a plurality of program instructions which may be executed from the program store.

The network apparatus 212 may further include one or more hardware elements, for example, a circuit, a component, an Integrated Circuit (IC), an Application Specific Integrated Circuit (ASIC), a Field Programmable Gate Array (FPGA), a Digital Signals Processor (DSP), a network processor and/or the like.

The network apparatus 212, specifically, the network apparatus 212A may thus include a circuitry utilizing one or more software modules, one or more of the hardware elements and/or a combination thereof configured to execute the process 100 and control and manage at least partially the first network 202A, for example, assign network addresses, control network traffic and/or the like.

Similarly, one or more of the network nodes 210 may optionally comprise one or more processors (homogenous or heterogeneous) arranged for parallel processing, as clusters and/or as one or more distributed core processing units and a storage for storing code (program store) and/or data. The processor(s) may execute one or more software modules each comprising a plurality of program instructions which may be executed from the program store. The multi-network node 210BA may further include one or more of the hardware elements. One or more of the network nodes 210, specifically, the multi-network node 210BA may thus include a circuitry utilizing one or more software modules, one or more of the hardware elements and/or a combination thereof configured to execute the process 150.

The exemplary process 100 and the exemplary networked system 200 are described for connecting a single multi-network node 210BA to the two separate and independently managed networks 202A and 202B. this, however should not be construed as limiting since the network apparatus 212A may apply the process 100 for creating a plurality of virtual sub-networks each for a respective network node 210 connected to both the first network 202A and the second network 202B. Moreover, while a single network apparatus 212 is described for each of the networks 202, for example, a single network apparatus 212A controlling the process 100 for the first network 202A, the first network 202A may be expanded to include a plurality of network apparatuses such as the network apparatus 212 each capable of conducting the process 100 for one or more network nodes 210 connected to multiple separate and independently managed networks 202.

The processes 100 and 150 which are executed by the network apparatus 212A and the multi-network node 210BA respectively are interlinked to and interact with each other. The processes 100 and 150 are therefore described in conjunction with each other according to the operational and functional sequence of the overall network address allocation and network traffic exchange combining the two processes 100 and 150.

Each network 202 is typically based on one or more addressing schemes as known in the art in which each network node 210 connected to the respective network 202 is assigned a unique network address. Each packet transmitted over the network 202 includes a source address field which includes the unique network address of the originating (transmitting) network node 210 and a destination address field which includes the unique network address of the destination network node 210 to which the packet is directed (destined). Moreover, in case multicast messages are supported by the respective network 202, the destination address field may include a group of network addresses of multiple destination network nodes 210. Furthermore, in case broadcast messages are supported by the respective network 202, the destination address field may indicate the message is directed to include all the network nodes 210 connected to the respective network 202.

As shown at 152, the process 150 starts with the multi-network node 210BA transmits one or more messages to the network apparatus 212A requesting to connect to the first network 202A while connected to one or more other (second) networks, for example the network 202B.

The connection request may typically include a request for a network address which may map the multi-network node 210BA in the first network 202A to enable the multi-network node 210BA to communicate with one or more of the network nodes 210A n connected to the first network 202A.

As shown at 102, the network apparatus 212A controlling and/or managing the first network 202A receives the connection request from the multi-network node 210BA. In particular, the multi-network node 210BA includes a plurality of network interfaces such that it may be connected to the second network 202B via one of its network interfaces and attempt to connect to the first network 202A via another (a different) one of its network interfaces.

As shown at 154, the multi-network node 210BA further transmits routing information comprising and/or describing network mapping (network addressing) of the multi-network node 210BA on the second network 202B. The network mapping included in the routing information may include, for example, a (second) network address range allocated for the second network 202B for mapping the network nodes 210 connected to the second network 202B, for example, the network node(s) 210B_m (m = 1, ..., M), one or more network addresses assigned to the multi-network node 210BA in the second address range, for example, an IP address and/or the like.

The multi-network node 210BA may apply one or more methods, techniques and/or protocols to transmit the routing information to the network apparatus 212A. For example, the multi-network node 210BA may transmit one or more broadcast messages comprising the routing information which may be intercepted by the network apparatus 212. In another example, the multi-network node 210BA may transmit one or more multicast messages comprising the routing information which may be intercepted by the network apparatus 212. In another example, the multi-network node 210BA may transmit one or more messages according to one or more negotiation protocols used between the multi-network node 210BA and the network apparatus 212A to establish a connection and/or to map the multi-network node 210BA in the first network 202A. Such negotiation protocols may include, for example, IKE, WPA and/or the like. In another example, the multi-network node 210BA may transmit one or more messages according to one or more extensions to the DHCP protocol applied by the network apparatus 212 to dynamically assign a network address to the multi-network node 210BA.As shown at 104, the network apparatus 212A receives the routing information from the multi-network node 210BA.

As shown at 106, the network apparatus 212A assigns a (real) network address to the multi-network node 210BA according to the network mapping (addressing) scheme employed in the first network 202A as known in the art. Specifically, the network apparatus 212A assigns the real network address to the multi-network node 210BA in a (first) network address range allocated for the first network 202A for mapping the network nodes 210 connected to the first network 202A, for example, the network node(s) 210A_n (n = 1, ..., N). For example, assuming the network mapping employed in the first network 202A is based on IP addresses, the network apparatus 212A may assign a real IP address to the multi-network node 210BA in a (first) IP address range allocated for the first network 202A.

However, as shown at 108, the network apparatus 212A further analyses the routing information received from the multi-network node 210BA to determine whether there is a mapping (addressing) conflict between the network mapping (addressing) scheme employed in the first network 202A and the network mapping scheme employed in the second network 202B. Specifically, the network apparatus 212A may analyze the routing information to identify a conflict between the first network address range allocated for the first network 202A and the second network address range applied in the second network 202B.

For example, the network apparatus 212A may analyze the routing information to identify the second IP address range used in the second network 202B, the IP address assigned to the multi-network node 210BA in the second IP address range and/or the like.

As shown at 110, which is a conditional step, in case the network apparatus 212A determines there is no network addressing conflict between the first network address range and the second network address range, the process 100 branches to 112. However, in case the network apparatus 212A determines that the first network address range may conflict with the second network address range, the process 100 branches to 114.

For example, assuming a second IP address range applied in the second network 202B is 10.0.0.0/24 (subnet mask 24) and an IP address 10.0.0.3/24 is assigned to the multi-network node 210BA in the second network 202B. Further assuming that the first IP address range applied in the first network 202A is 192.168.0.0/24 and an IP address 192.168.0.20/24 is assigned to the multi-network node 210BA in the first network 202A. In such case there is no conflict between the first and second IP address ranges and the multi-network node 210BA may use the IP address 10.0.0.0.3/24 for one of its network interfaces connected to the second network and the IP address 192.168.0.20 for another of its network interfaces connected to the first network 202A.

In another example, assuming the second IP address range applied in the second network 202B is again 10.0.0.0/24 and the IP address 10.0.0.3/24 is assigned to the multi-network node 210BA in the second network 202B. Further assuming that the first IP address range applied in the first network 202A is also 10.0.0.0/24 and the IP address 10.0.0.4/24 is assigned to the multi-network node 210BA in the first network 202A. In such case there is evidently a conflict between the first and second IP address ranges which may lead to confusion between the two network interfaces thus preventing the multi-network node 210BA to effectively direct packets to the correct network interface and/or to identify the origin of received packets which may possibly fail the entire communication over the first network 202A and/or the second network 202B.

As shown at 112, since there is no conflict between the first network address range and the second network address range, the network apparatus 212A may transmit to the multi-network node 210BA the (real) network address assigned (in step 106) to the multi-network node 210BA in the first network address range of the first network 202A.

As shown at 114, since there is a conflict between the first network address range and the second network address range preventing the multi-network node 210BA from using the real network address assigned to it in the first network address range, the network apparatus 212A creates for the multi-network node 210BA a virtual sub-network established over the first network 202A.

Specifically, the network apparatus 212A allocates a third network address range for the created virtual sub-network which is a virtual network address space that is not conflicting (not colliding) with the second address range applied in the second network 202B.

Optionally, in case the first network 202A and the second network 202B employ IP addressing, the third network address range allocated by the network apparatus 212A for the virtual sub-network may be an IPv6 address range which significantly extends the range of available IP addresses which support significantly increased flexibility to prevent conflicts between the third network address range and the second network address range.

As shown at 116, the network apparatus 212A assigns a virtual address to the multi-network node 210BA in the third address space to map the multi-network node 210BA in the virtual sub-network established over the first network 202A.

As shown at 118, the network apparatus 212A further assigns a respective virtual address to one or more of the network nodes 210A_n connected to the first network 202A to map this network node(s) 202A_n in the virtual sub-network created for the multi-network node 210BA to support communication between the multi-network node 210BA and the network node(s) 202A_n mapped in the virtual sub-network.

As shown at 120, the network apparatus 212A transmits to the multi-network node 210BA the virtual address mapping the multi-network node 210BA in the virtual sub-network.

As shown at 156, the multi-network node 210BA receives the network address assigned to it by the network apparatus 212. As described herein before in step 112, in case of no network addressing conflict, the received address is the (real) network address assigned to the multi-network node 210BA in the first address range to map it in the first network 202A. However, in case of network addressing conflict the received address is the virtual network address transmitted by the network apparatus 212A as described in step 120 which is assigned to the multi-network node 210BA in the third network address range to map it in the virtual sub-network established over the first network 202A.

Reference is now made to FIG. 3, which is a schematic illustration of an exemplary networked system for creating a virtual sub-network to assign a non-conflicting IP address to a network node connected to a plurality of networks based on routing information received from the network node, according to some embodiments of the present disclosure.

An exemplary sequence 300 may be initiated by a network node such as the multi-network node 210BA connected to one or more networks such as the second network 202B which requests to connect to another network such as the first network 202A controlled by a network apparatus such as the network apparatus 212A. The sequence 300 may start with the multi-network node 210BA transmitting a connection request to the network apparatus 212A requesting to connect to the first network 202A as described in step 152 of the process 150. The multi-network node 210BA may further transmit its routing information to the network apparatus 212A as described in step 154 of the process 150.

The multi-network node 210BA may then request a network address mapping it in the first network 202A to support packets transfer between the multi-network node 210BA and one or more network nodes such as the network nodes 210A_n connected to the first network 202A as described in step 152 of the process 150.

In response to the connection request received from the multi-network node 210BA, the network apparatus 212A may assign a real network address to the multi-network node 210BA mapping the multi-network node 210BA in the first network address range utilized in the first network 202A.

In case the first network address range conflicts with the second network address range utilized in the second network 202B, the network apparatus 212A may create for the multi-network node 210BA a virtual sub-network allocated with a third network address range which is non-conflicting (non-colliding) with the second network address range as described in step 114 of the process 100.

The network apparatus 212A may then assign a unique virtual network address to the multi-network node 210BA thus mapping it in the virtual sub-network as described in step 116 of the process 100. The network apparatus 212A may further assign a unique virtual network address to one or more of the network nodes 210A _n connected to the first network 202A to map them in the virtual sub-network created for the multi-network node 210BA as described in step 118 of the process 100.

The network apparatus 212A may transmit the virtual network address to the multi-network node 210BA as described in step 118 of the process 100.

Additionally, and/or alternatively, the network mapping included in the routing information received from the multi-network node 210BA includes a preferred virtual network address which the multi-network node 210BA requests to be assigned in the first network 202A. In particular, the preferred virtual network address is determined by the multi-network node 210BA as not conflicting with the network mapping (addressing) applied in the second network 202B. For example, the preferred virtual network address is not within the second network address range used in the second network 202B. This means that the analysis of the routing information is done by the multi-network node 210BA which, based on the analysis, selects the preferred virtual network address to be assigned to it to map it in the first network 202A.

As described herein before, the multi-network node 210BA may apply one or more methods, techniques and/or protocols to transmit the routing information in general and the preferred virtual network address in particular. For example, the multi-network node 210BA may transmit the preferred virtual network address in one or more messages according to one or more extensions of the DHCP protocol.

For example, the multi-network node 210BA may transmit one or more extended DHCP discover messages, for example, using reserved options to transmit the preferred virtual network address, for example, DHCP DISCOVER OPT=222(preferred virtual network address). In another the multi-network node 210BA may transmit an extended DHCP discover message DHCP DISCOVER OPT=223(second address range, preferred virtual address,) to transmit the second address range used in the second network 202B and the preferred virtual network address.

For example, assuming the second network address range is 10.0.0.0/24, the multi-network node 210BA may transmit the message DHCP DISCOVER OPT=222(10.10.12.0/24) to indicate the preferred virtual network address range 10.10.12.0/24 selected by the multi-network node 210BA after determining it is not conflicting with the second network address range. In another example, the multi-network node 210BA may transmit the message DHCP DISCOVER OPT=223(10.10.40.0, 192.168.2.0) to indicate the second address range (10.10.40.0) used in the second network 202B and the preferred virtual network address (192.168.2.0).

In such case, the network apparatus 212A is relieved of analyzing the routing information which may optionally not be transmitted by the multi-network node 210BA and may create the virtual sub-network for the multi-network node 210BA according to the preferred virtual network address selected by the multi-network node 210BA. In particular, the network apparatus 212A may define the third network address range according to the preferred virtual network address requested by the multi-network node 210BA.

The network apparatus 212A may then assign the preferred virtual network address to the multi-network node 210BA and may further assign a unique virtual networks address selected in the third network address range for one or more of the network nodes 210A_n.

Reference is now made to FIG. 4, which is a schematic illustration of an exemplary sequence for creating a virtual sub-network to assign a non-conflicting network address to a network node connected to a plurality of networks based on routing information received from the network node, according to some embodiments of the present disclosure.

An exemplary sequence 400 may be initiated by a network node such as the multi-network node 210BA connected to one or more networks such as the second network 202B which requests to connect to another network such as the first network 202A controlled by a network apparatus such as the network apparatus 212A. The sequence 400 starts with the multi-network node 210BA transmitting a connection request to the network apparatus 212A requesting to connect to the first network 202A as described in step 152 of the process 150.

The multi-network node 210BA may further transmit one or more messages indicating a preferred virtual network address which the multi-network node 210BA requests to use for mapping the multi-network node 210BA in the first network 202A. As described herein before, the multi-network node 210BA selects the preferred virtual network address such that it is not conflicting with the second network address range used in the second network 202B.

In response to the request preferred virtual network address received from the multi-network node 210BA, the network apparatus 212A assigns a real network address to the multi-network node 210BA mapping the multi-network node 210BA in the first network address range utilized in the first network 202A. The network apparatus 212A further creates for the multi-network node 210BA a virtual sub-network allocated with a third network address range defined according to the preferred virtual network address requested by the multi-network node 210BA.

The network apparatus 212A may then assign the preferred virtual network address to the multi-network node 210BA thus mapping it in the virtual sub-network as described in step 116 of the process 100. The network apparatus 212A further assigns a unique virtual network address in the third network address range to one or more of the network nodes 210A_n connected to the first network 202A to map them in the virtual sub-network created for the multi-network node 210BA as described in step 118 of the process 100.

The network apparatus 212A may transmit the preferred virtual network address back to the multi-network node 210BA as described in step 118 of the process 100 thus confirming the allocation of the preferred virtual network address.

Reference is made once again to FIG. 1.

As shown at 158, the multi-network node 210BA uses the network address received from the network apparatus 212 to communicate with one or more of the network nodes 210A _n connected to the first network 202A. As described herein before the network address assigned to the multi-network node 210BA may be in the first address range of the first network 202A in case of no address conflict between the first address range and the second address range. In case of a network addressing conflict, the network address assigned to the multi-network node 210BA is in the third network address range to map the multi-network node 210BA in the virtual sub-network established over the first network 202A.

As shown at 122, in case the virtual sub-network is created for the multi-network node 210BA over the first network 202A, the network apparatus 212A manages and controls packets exchanged between the multi-network node 210BA and one or more of the other network nodes 210A_n connected to the first network 202A and mapped in the virtual sub-network.

Since the network node(s) 210A_n is unaware of the virtual sub-network created for the multi-network node 210BA, the network node(s) 210A_n uses the real network address assigned to the multi-network node 210BA in the first address space allocated for the first network 202A to exchange packets with the multi-network node 210BA. The multi-network node 210BA on the other hand is connected to the virtual sub-network and mapped in the third network address range and is thus unaware of the network addressing applied in the first network to map the network node(s) 210A_n in the first network address range.

The network apparatus 212A therefore intercepts message transmitted to and/or from the multi-network node 210BA and translates the packets addresses from the virtual network addresses (in the third address space) to the real network addresses (in the first address space) and vice versa as required.

In particular, the network apparatus 212A manages (controls) network traffic originating from the multi-network node 210BA by adjusting and forwarding each packet transmitted by the multi-network node 210BA to one or more of the network nodes 210A_n as follows:
- Adjust a source address (field) of the message comprising the virtual network address of the multi-network node 210BA (in the third address space) to the real network address of the multi-network node 210BA (in the first address space).
- Adjust a destination address (field) of the message comprising the virtual network address of the destination network node 210A_n (in the third address space) to the real network address of the destination network node 210A_n (in the first address space).
- Forward the adjusted message to the destination network node 210A_n.

The network apparatus 212A may manage a plurality of packet types transmitted by the multi-network node 210BA to one or more of the network nodes 210A_n, for example, unicast packets, multicast packets, broadcast packets and/or the like. For example, in case the multi-network node 210BA transmits a unicast packet to a certain network node 212A_n, for example, the network node 212A_1. In such case the network apparatus 212A may adjust the destination address of the unicast packet to include the real network address of the network node 212A_1. In another example, assuming the multi-network node 210BA transmits a multicast packet to a certain multicast group of network nodes 210A_n created as known in the art in the first network 202A. In such case the network apparatus 212A may adjust the destination address of a multicast packet to include the real network address assigned to the multicast group. In another example, assuming the multi-network node 210BA transmits a broadcast packet to all network nodes 210A_n connected to the first network 202A. In such case the network apparatus 212A may adjust the destination address of a broadcast packet to include a real network address defined to reach all of the network nodes 210A_n.

Complementary, the network apparatus 212A manages (controls) network traffic originating from the network node(s) 210A_n and destined to the multi-network node 210BA by adjusting and forwarding each packet transmitted each network node 210A_n to the multi-network node 210BA as follows:
- Adjust a source address (field) of the message comprising the real network address of the originating network node 210A_n (in the first address space) to the virtual network address of the originating network node 210A_n (in the third address space).
- Adjust a destination address (field) of the message comprising the real network address of the multi-network node 210BA (in the first address space) to the virtual network address of the multi-network node 210BA (in the third address space).
- Forward the adjusted message to the multi-network node 210BA.

As described for packets transmitted by the multi-network node 210BA, the network apparatus 212A may manage a plurality of packet types transmitted to the multi-network node 210BA from one or more of the network nodes 210A_n, for example, unicast packets, multicast packets, broadcast packets and/or the like. For example, in case a certain network node 212A_n, for example, the network node 212A_2 transmits a unicast packet to the multi-network node 210BA. In such case the network apparatus 212A may adjust the destination address of the unicast packet to include the virtual network address of the multi-network node 210BA. In another example, assuming a certain network node 212A_n, for example, the network node 212A_1 transmits a multicast packet to a certain multicast group in which the multi-network node 210BA is a member. In such case the network apparatus 212A may intercept the multicast packet and retransmit it with the virtual network address of the multi-network node 210BA. In another example, assuming a certain network node 212A_n, for example, the network node 212A_N transmits a broadcast packet to all network nodes 210A_n connected to the first network 202 which include the multi-network node 210BA. In such case the network apparatus 212A may intercept the broadcast packet and retransmit it with the virtual network address of the multi-network node 210BA.

The network apparatus 212A may further provide one or more services to support detection, discovery, connection and/or communication between the multi-network node 210BA connected to the virtual sub-network established over the first network 202A and one or more of the network nodes 210A_n connected to the first network 202A. For example, the network apparatus 212A may provide network discovery services. In another example, the network apparatus 212A may provide DNS services. In another example, the network apparatus 212A may provide HTTP response services. In another example, the network apparatus 212A may provide one or more services to support one or more of the network nodes 202A_n to establish one or more Ad-hoc networks with one or more of the other network nodes 210, specifically with the multi-network node 210BA.

As state herein before, the network apparatus 212A may establish a plurality of virtual sub-networks over the first network 202A each created for a respective one of a plurality of network nodes such as the multi-network node 210BA connected to multiple other networks such as the second network 202B which are separated from the first network 202A and are independently managed and may thus present addressing conflicts with the first network address range.

Reference is now made to FIG. 5, which is a schematic illustration of an exemplary sequence for managing network traffic packets exchanged between network nodes via a virtual sub-network created to assign a non-conflicting network address to a network node connected to a plurality of networks, according to some embodiments of the present disclosure.

An exemplary sequence 500 describes network traffic packets exchanged between a network node such as the multi-network node 210BA connected to a first network such as the first network 202A and mapped in a virtual sub-network established for the multi-network node 210BA over the first network 202A by a network apparatus such as the network apparatus 212A controlling the first network 202A. In particular, the multi-network node 210BA is mapped in the virtual sub-network using a virtual network address assigned in a third network address range which is not conflicting with w second network address range used by a second network such as the second network 202B to which the multi-network node 210BA is also connected via a different network interface.

As seen in the sequence 500, the multi-network node 210BA may transmit one or more packets to another network node 210 connected to the first network 202A, for example, the network node 210A_1. Each packet transmitted by the multi-network node 210BA includes in its source and destination address fields the virtual addresses assigned to the multi-network node 210BA and the network node 210A_1 in the third network address range allocated to the virtual sub-network. In particular, the virtual network address of the multi-network node 210BA in the source address field and the virtual network address of the network node 210A_1 in the destination network address field.

As described in step 122 of the process 100, the network apparatus 212A translates the virtual network addresses assigned to the multi-network node 210BA and the network node 210A_1 in the third network address range allocated for the virtual sub-network to the real network addresses assigned for the multi-network node 210BA and the network node 210A_1 in the first network address range used by the first network 202A. As such the network apparatus 212A adjusts the source address to translate the virtual network address of the multi-network node 210BA to the real network address of the multi-network node 210BA and further adjusts the destination address to translate the virtual network address of the network node A10A_1 to the real network address of the network node 210A_1. The network apparatus 212A then forwards the adjusted packet to the network node 210A_1.

On the response path, the network node 210A_1 may respond with one or more packets transmitted to the multi-network node 210BA. As also described in step 122 of the process 100, the network apparatus 212A translates the real network addresses assigned for the multi-network node 210BA and the network node 210A_1 in the first network address range to the virtual network addresses assigned to the multi-network node 210BA and the network node 210A_1 in the third network address range. As such the network apparatus 212A adjusts the source address to translate the real network address of the network node 210A_1 to the virtual network address of the network node 210A_1 and further adjusts the destination address to translate the real network address of the multi-network node 210BA to the virtual network address of the multi-network node 210BA. The network apparatus 212A then forwards the adjusted packet to the multi-network node 210BA.

Reference is now made to FIG. 6, which is a schematic illustration of an exemplary networked system applying IP addresses for creating a virtual sub-network to assign a non-conflicting network address to a network node connected to another network, according to some embodiments of the present disclosure. An exemplary networked system 200A such as the networked system 200 may include a first network such as the first network 202A and a second network such as the second network 202B which are separated of each other and independently managed by their respective network apparatuses such as the network apparatuses 212A and 212B respectively such that they are oblivious to each other.

The first network 202A hosts a single network node such as the network node 210A_1 while the second network 202B hosts a network node such as the network node 210B_1 and a network node such as the network node 210B_2.

The exemplary networked system 200A is based on IP address mapping. Since the two networks 202A and 202B are separated and independently managed it is possible that the IP address ranges applied in the two networks 202A and 202B may conflict (overlap) with each other. For example, the same IP address range 10.0.0.0/24 is used in both the first IP (network) address range of the first network 202A and in the second IP (network) address range of the second network 202B.

This addressing conflict may not present a problem for network nodes 210 connected to only one of the first network 202A or the second network 202B. For example, the network node 210A_1 assigned IP address 10.0.0.3/24 in the first network 202A may not experience addressing conflicts since it is not connected to the second network 202B employing the same IP address range. In another example, the network nodes 210B_1 and the network node210B_2 assigned IP addresses 10.0.0.2/24 and 10.0.0.3/24 respectively in the second network 202B may not experience addressing conflicts since they are not connected to the first network 202A employing the same IP address range.

However, a network node such as the multi-network node 210BA which is connected to the second network 202B and assigned IP address 10.0.0.3/24 may request to connect to the first network 202A. Obviously, in case the multi-network node 210BA is assigned a real IP address in the first IP address range which is also 10.0.0.0/24, there may be a conflict which may degrade and potentially prevent communication of the multi-network node 210BA over the first network 202A and/or the second network 202B.

The network apparatus 212A receiving the connection request of the multi-network node 210BA may first assign a real IP address to the multi-network node 210BA, for example, 10.0.0.4/24 to map the multi-network node 210BA in the first IP address range for the network node 210A_1 as described in step 106 of the process 100.

However, the network apparatus 212A may further receives the routing information of the multi-network node 210BA and may identify the potential conflict based on analysis of the routing information as described in step 108 of the process 100.

As described in step 114 of the process 100, the network apparatus 212A may therefore create a virtual sub-network for the multi-network node 210BA over the first network 202A. The network apparatus 212A may allocate a third IP (network) address range for the virtual sub-network which is not conflicting with the second IP address range thus avoiding addressing conflicts for the multi-network node 210BA. For example, the network apparatus 212A may select the IP address range 10.0.1.0/24 for the third IP address range.

The network apparatus 212A may then assign a virtual IP address to the multi-network node 210BA in the third IP address range, for example, 10.0.1.4/24 to map the multi-network node 210BA in the virtual sub-network as described in step 116 of the process 100. The network apparatus 212A may further assign a virtual IP address to the network node 210A_1 in the third IP address range, for example, 10.0.1.3/24 to map the network node 210A_1 in the virtual sub-network as described in step 118 of the process 100. The network apparatus 212A may also assign a virtual IP address in the third IP address range, for example, 10.0.1.1/24 to map to itself in the virtual sub-network for the multi-network node 210BA.

As described in step 122 of the process 100, the network apparatus 212A may intercept packets exchanged between the multi-network node 210BA and the network node 210A_1 and may adjust them by translating the virtual IP addresses to the real IP addresses and vice versa to support the packets transfer.

For example, a packet transmitted by the multi-network node 210BA to the network node 210A_1 may include the virtual IP address 10.0.1.4/24 of the multi-network node 210BA in the source address field and the virtual IP address 10.0.1.3/24 of the network node 210A_1 in the destination address field. The network apparatus 212A may intercept and adjust the message's source and destination address fields to include the real IP addresses, specifically, adjust (translate) the source address to the real IP address 10.0.0.4/24 of the multi-network node 210BA and the destination address to the real IP address 10.0.0.3/24 of the network node 210A_1.

In another example, a packet transmitted by the multi-network node 210BA_1 to the multi-network node 210BA may include the real IP address 10.0.0.3/24 of the network node 210A_1 in the source address field and the real IP address 10.0.0.4/24 of the multi-network node 210BA in the destination address field. The network apparatus 212A may intercept and adjust the message's source and destination address fields to include the virtual IP addresses, specifically, adjust (translate) the source address to the virtual IP address 10.0.1.3/24 of the network node 210A_1 and the destination address to the virtual IP address 10.0.1.4/24 of the multi-network node 210BA.

The descriptions of the various embodiments of the present disclosure have been presented for purposes of illustration, but are not intended to be exhaustive or limited to the embodiments disclosed. Many modifications and variations will be apparent to those of ordinary skill in the art. The terminology used herein was chosen to best explain the principles of the embodiments, the practical application or technical improvement over technologies found in the marketplace, or to enable others of ordinary skill in the art to understand the embodiments disclosed herein.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the disclosure may include a plurality of "optional" features unless such features conflict.

Throughout this application, various embodiments of this disclosure may be presented in a range format. It should be understood that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals there between.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable subcombination or as suitable in any other described embodiment of the disclosure. Certain features described in the context of various embodiments are not to be considered essential features of those embodiments, unless the embodiment is inoperative without those elements.

## Claims

1. A network apparatus, comprising:
a circuitry controlling a first network, and the circuitry is configured to:
receive (102) routing information from a multi-network node requesting to connect to the first network, wherein the multi-network node is already connected to at least one second network separated from the first network; said routing information comprising at least one of: the second network address range and a network address assigned to the network node in the at least one second network;
identify (108), based on analysis of the routing information, an address conflict between a first network address range of the first network and a second network address range of the at least one second network;
assign an address from a first network address range of the first network to the multi-network node without transmitting the address to the multi-network node;
assign (116) a virtual network address to the multi-network node in a third network address range allocated to a virtual sub-network established over the first network which is non-conflicting with the second network address range; and
transmit (120) the virtual network address to the multi-network node;
wherein the circuitry is configured to assign (118) another virtual network address in the third network address range to at least one another network node connected to the first network;
wherein the assigned virtual network address is not transmitted to the at least one another node;
wherein the circuitry is configured to control network traffic transmitted by the multi-network node to the at least one another network node by performing the following for each transmitted message:
- intercept the message transmitted by the multi-network node;
- adjust a source address of the message comprising the virtual address of the multi-network node to said network address assigned to the multi-network node in the first address range,
- adjust a destination address of the message comprising the virtual address of the at least one another network node to a network address of the at least one another network node in the first address range, and
- forward the message to the at least one another network node;
wherein the circuitry is configured to control network traffic transmitted to the multi-network node by the at least one another network node by performing the following for each transmitted message:
- intercept the message transmitted by the at least one another network node;
- adjust a source address of the message comprising a network address of the at least one another network node in the first address range to the virtual address assigned to the at least one another network node in the third address range,
- adjust a destination address of the message comprising a network address assigned to the multi-network node in the first address range to the virtual address of the multi-network node, and
- forward the message to the network node, thereby enabling the multi-network node to effectively direct packets to the correct network interface and/or to identify the origin of the received packets.

2. The apparatus of any one of the preceding claims, further comprising the network mapping comprising a preferred virtual network address determined by the multi-network node which is not conflicting with network address assigned to the multi-network node in the at least one second network.

3. The apparatus of any one of the preceding claims, wherein the circuitry receives the routing information from the multi-network node in at least one of:
- at least one broadcast message transmitted on the first network by the multi-network node,
- at least one multicast message transmitted on the first network by the multi-network node,
- at least one message transmitted by the multi-network node according to at least one extension of the Dynamic Host Configuration Protocol, DHCP,
- at least one message transmitted by the multi-network node according to at least one negotiation protocol used between the multi-network node and the circuitry.

4. The apparatus of any one of the preceding claims, wherein the network address and the virtual address are Internet Protocol, IP, addresses.

5. The apparatus of any one of the preceding claims, wherein the circuitry is further configured to configure the third network address range using an IPv6 address range.

6. The apparatus of any one of the preceding claims, wherein the circuitry is further configured to create (114) a plurality of virtual sub-networks for a plurality of network nodes requesting to connect to the first network, each virtual sub-network is created for a respective one of the plurality of network nodes, which is connected to at least one another network having a network address range that conflicts with the first address range.

7. The apparatus of any one of the preceding claims, wherein the first network and the second network are constructed of at least one physical network and/or at least one virtual network and each of the plurality of network nodes is a physical network node or a virtual network node.

8. The apparatus of claim 7, wherein the circuitry executes at least one virtual switch to control the at least one virtual network.

9. The apparatus of any one of the preceding claims, wherein the circuitry is further configured to provide at least one network address discovery service to the multi-network node.

10. A computer implemented method of creating a virtual sub-network for a multi-network node connected to a plurality of networks, comprising:
receiving (104) routing information from a multi-network node requesting to connect to the first network, wherein the multi-network node is already connected to at least one second network separated from the first network; said routing information comprising at least one of: the second network address range and a network address assigned to the network node in the at least one second network;
identifying (108), based on analysis of the routing information, an address conflict between a first network address range of the first network and a second network address range of the at least one second network;
assigning an address from a first network address range of the first network to the multi-network node without transmitting the address to the multi-network node;
assigning (116) a virtual network address to the multi-network node in a third network address range allocated to a virtual sub-network established over the first network which is non-conflicting with the second network address range; and
transmitting (120) the virtual network address to the multi-network node;
wherein another virtual network address in the third network address range is assigned (118) to at least one another network node connected to the first network;
wherein the assigned virtual network address is not transmitted to the at least one another node;
wherein the method further comprises controlling network traffic transmitted by the multi-network node to the at least one another network node by, for each transmitted message:
- intercepting the message transmitted by the multi-network node;
- adjusting a source address of the message comprising the virtual address of the multi-network node to said network address assigned to the multi-network node in the first address range,
- adjusting a destination address of the message comprising the virtual address of the at least one another network node to a network address of the at least one another network node in the first address range, and
- forwarding the message to the at least one another network node;
wherein the method further comprises controlling network traffic transmitted to the multi-network node by the at least one another network node by, following for each transmitted message:
- intercepting the message transmitted by the at least one another network node;
- adjusting a source address of the message comprising a network address of the at least one another network node in the first address range to the virtual address assigned to the at least one another network node in the third address range,
- adjusting a destination address of the message comprising a network address assigned to the multi-network node in the first address range to the virtual address of the multi-network node, and
- forwarding the message to the network node, thereby enabling the multi-network node to effectively direct packets to the correct network interface and/or to identify the origin of the received packets.

## Patentansprüche

1. Netzwerkvorrichtung, umfassend:
eine Schaltung, die ein erstes Netzwerk steuert, wobei die Schaltung zu Folgendem konfiguriert ist:
Empfangen (102) von Routing-Informationen von einem Mehrfachnetzwerkknoten, der eine Verbindung mit dem ersten Netzwerk anfordert, wobei der Mehrfachnetzwerkknoten bereits mit mindestens einem zweiten Netzwerk verbunden ist, das von dem ersten Netzwerk getrennt ist; wobei die Routing-Informationen mindestens eines der Folgenden umfassen: den zweiten Netzwerkadressbereich und eine Netzwerkadresse, die dem Netzwerkknoten in dem mindestens einen zweiten Netzwerk zugewiesen ist;
Identifizieren (108) eines Adresskonflikts zwischen einem ersten Netzwerkadressbereich des ersten Netzwerks und einem zweiten Netzwerkadressbereich des mindestens einen zweiten Netzwerks basierend auf einer Analyse der Routing-Informationen;
Zuweisen einer Adresse aus einem ersten Netzwerkadressbereich des ersten Netzwerks an den Mehrfachnetzwerkknoten, ohne die Adresse an den Mehrfachnetzwerkknoten zu übertragen;
Zuweisen (116) einer virtuellen Netzwerkadresse an den Mehrfachnetzwerkknoten in einem dritten Netzwerkadressbereich, der einem über das erste Netzwerk eingerichteten virtuellen Subnetzwerk zugeordnet ist, das nicht mit dem zweiten Netzwerkadressbereich in Konflikt steht; und
Übertragen (120) der virtuellen Netzwerkadresse an den Mehrfachnetzwerkknoten;
wobei die Schaltung dazu konfiguriert ist, mindestens einem anderen mit dem ersten Netzwerk verbundenen Netzwerkknoten eine andere virtuelle Netzwerkadresse in dem dritten Netzwerkadressbereich zuzuweisen (118);
wobei die zugewiesene virtuelle Netzwerkadresse nicht an den mindestens einen anderen Knoten übertragen wird;
wobei die Schaltung dazu konfiguriert ist, den Netzwerkverkehr zu steuern, der von dem Mehrfachnetzwerkknoten an den mindestens einen anderen Netzwerkknoten übertragen wird, indem für jede übertragene Nachricht Folgendes durchgeführt wird:
- Abfangen der von dem Mehrfachnetzwerkknoten gesendeten Nachricht;
- Anpassen einer Quelladresse der Nachricht, die die virtuelle Adresse des Mehrfachnetzknotens umfasst, an die Netzwerkadresse, die dem Mehrfachnetzknoten in dem ersten Adressbereich zugewiesen ist,
- Anpassen einer Zieladresse der Nachricht, die die virtuelle Adresse des mindestens einen anderen Netzwerkknotens umfasst, an eine Netzwerkadresse des mindestens einen anderen Netzwerkknotens in dem ersten Adressbereich, und
- Weiterleiten der Nachricht an den mindestens einen anderen Netzwerkknoten;
wobei die Schaltung dazu konfiguriert ist, den Netzwerkverkehr zu steuern, der an den Mehrfachnetzwerkknoten durch den mindestens einen anderen Netzwerkknoten übertragen wird, indem für jede übertragene Nachricht Folgendes durchgeführt wird:
- Abfangen der von dem mindestens einem anderen Netzwerkknoten gesendeten Nachricht;
- Anpassen einer Quelladresse der Nachricht, die eine Netzwerkadresse des mindestens einen anderen Netzwerkknotens in dem ersten Adressbereich umfasst, an die virtuelle Adresse, die dem mindestens einen anderen Netzwerkknoten im dritten Adressbereich zugewiesen ist,
- Anpassen einer Zieladresse der Nachricht, die eine Netzwerkadresse umfasst, die dem Mehrfachnetzknoten in dem ersten Adressbereich zugewiesen ist, an die virtuelle Adresse des Mehrfachnetzknotens, und
- Weiterleiten der Nachricht an den Netzwerkknoten, was es dem Mehrfachnetzwerkknoten ermöglicht, Pakete effektiv an die richtige Netzwerkschnittstelle zu leiten und/oder den Ursprung der empfangenen Pakete zu identifizieren.

2. Vorrichtung nach einem der vorhergehenden Ansprüche, ferner umfassend dass die Netzwerkabbildung eine durch den Mehrfachnetzwerkknoten bestimmte bevorzugte virtuelle Netzwerkadresse umfasst, die nicht mit der Netzwerkadresse in Konflikt steht, die dem Mehrfachnetzwerkknoten in dem mindestens einen zweiten Netzwerk zugewiesen ist.

3. Vorrichtung nach einem der vorhergehenden Ansprüche, wobei die Schaltung die Routing-Informationen von dem Mehrfachnetzwerkknoten in mindestens einem der Folgenden empfängt:
- mindestens eine Broadcast-Nachricht, die durch den Mehrfachnetzwerkknoten in dem ersten Netzwerk übertragen wird,
- mindestens eine Multicast-Nachricht, die durch den Mehrfachnetzwerkknoten in dem ersten Netzwerk übertragen wird,
- mindestens eine Nachricht, die durch den Mehrfachnetzwerkknoten gemäß mindestens einer Erweiterung des Dynamic Host Configuration Protocol (DHCP) übertragen wird,
- mindestens eine Nachricht, die durch den Mehrfachnetzwerkknoten gemäß mindestens einem zwischen dem Mehrfachnetzwerkknoten und der Schaltung verwendeten Verhandlungsprotokoll übertragen wird.

4. Vorrichtung nach einem der vorhergehenden Ansprüche, wobei die Netzwerkadresse und die virtuelle Adresse Internetprotokoll-Adressen (IP-Adressen) sind.

5. Vorrichtung nach einem der vorhergehenden Ansprüche, wobei die Schaltung ferner dazu konfiguriert ist, den dritten Netzwerkadressbereich unter Verwendung eines IPv6-Adressbereichs zu konfigurieren.

6. Vorrichtung nach einem der vorhergehenden Ansprüche, wobei die Schaltung ferner dazu konfiguriert ist, eine Vielzahl virtueller Subnetzwerke für eine Vielzahl von Netzwerkknoten zu erstellen (114), die eine Verbindung mit dem ersten Netzwerk anfordern, wobei jedes virtuelle Subnetzwerk für einen jeweiligen einen der Vielzahl von Netzwerkknoten erstellt wird, der mit mindestens einem anderen Netzwerk verbunden ist, das einen Netzwerkadressbereich aufweist, der mit dem ersten Adressbereich in Konflikt steht.

7. Vorrichtung nach einem der vorhergehenden Ansprüche, wobei das erste Netzwerk und das zweite Netzwerk aus mindestens einem physischen Netzwerk und/oder mindestens einem virtuellen Netzwerk aufgebaut sind und jeder der Vielzahl von Netzwerkknoten ein physischer Netzwerkknoten oder ein virtueller Netzwerkknoten ist.

8. Vorrichtung nach Anspruch 7, wobei die Schaltung mindestens einen virtuellen Switch ausführt, um das mindestens eine virtuelle Netzwerk zu steuern.

9. Vorrichtung nach einem der vorhergehenden Ansprüche, wobei die Schaltung ferner dazu konfiguriert ist, dem Mehrfachnetzwerkknoten mindestens einen Netzwerkadressenerkennungsdienst bereitzustellen.

10. Computerimplementiertes Verfahren zum Erstellen eines virtuellen Subnetzwerks für einen Mehrfachnetzwerkknoten, der mit einer Vielzahl von Netzwerken verbunden ist, umfassend:
Empfangen (104) von Routing-Informationen von einem Mehrfachnetzwerkknoten, der eine Verbindung mit dem ersten Netzwerk anfordert, wobei der Mehrfachnetzwerkknoten bereits mit mindestens einem zweiten Netzwerk verbunden ist, das von dem ersten Netzwerk getrennt ist; wobei die Routing-Informationen mindestens eines der Folgenden umfassen: den zweiten Netzwerkadressbereich und eine Netzwerkadresse, die dem Netzwerkknoten in dem mindestens einen zweiten Netzwerk zugewiesen ist;
Identifizieren (108) eines Adresskonflikts zwischen einem ersten Netzwerkadressbereich des ersten Netzwerks und einem zweiten Netzwerkadressbereich des mindestens einen zweiten Netzwerks basierend auf einer Analyse der Routing-Informationen;
Zuweisen einer Adresse aus einem ersten Netzwerkadressbereich des ersten Netzwerks an den Mehrfachnetzwerkknoten, ohne die Adresse an den Mehrfachnetzwerkknoten zu übertragen;
Zuweisen (116) einer virtuellen Netzwerkadresse an den Mehrfachnetzwerkknoten in einem dritten Netzwerkadressbereich, der einem über das erste Netzwerk eingerichteten virtuellen Subnetzwerk zugeordnet ist, das nicht mit dem zweiten Netzwerkadressbereich in Konflikt steht; und
Übertragen (120) der virtuellen Netzwerkadresse an den Mehrfachnetzwerkknoten;
wobei mindestens einem anderen mit dem ersten Netzwerk verbundenen Netzwerkknoten eine andere virtuelle Netzwerkadresse in dem dritten Netzwerkadressbereich zugewiesen (118) wird;
wobei die zugewiesene virtuelle Netzwerkadresse nicht an den mindestens einen anderen Knoten übertragen wird;
wobei das Verfahren ferner Steuern des Netzwerkverkehrs umfasst, der von dem Mehrfachnetzwerkknoten an den mindestens einen anderen Netzwerkknoten für jede übertragene Nachricht übertragen wird, durch:
- Abfangen der von dem Mehrfachnetzwerkknoten gesendeten Nachricht;
- Anpassen einer Quelladresse der Nachricht, die die virtuelle Adresse des Mehrfachnetzknotens umfasst, an die Netzwerkadresse, die dem Mehrfachnetzknoten in dem ersten Adressbereich zugewiesen ist,
- Anpassen einer Zieladresse der Nachricht, die die virtuelle Adresse des mindestens einen anderen Netzwerkknotens umfasst, an eine Netzwerkadresse des mindestens einen anderen Netzwerkknotens in dem ersten Adressbereich, und
- Weiterleiten der Nachricht an den mindestens einen anderen Netzwerkknoten;
wobei das Verfahren ferner Steuern des Netzwerkverkehrs umfasst, der an den Mehrfachnetzwerkknoten durch den mindestens einen anderen Netzwerkknoten für jede übertragene Nachricht übertragen wird, durch:
- Abfangen der von dem mindestens einem anderen Netzwerkknoten gesendeten Nachricht;
- Anpassen einer Quelladresse der Nachricht, die eine Netzwerkadresse des mindestens einen anderen Netzwerkknotens in dem ersten Adressbereich umfasst, an die virtuelle Adresse, die dem mindestens einen anderen Netzwerkknoten im dritten Adressbereich zugewiesen ist,
- Anpassen einer Zieladresse der Nachricht, die eine Netzwerkadresse umfasst, die dem Mehrfachnetzknoten in dem ersten Adressbereich zugewiesen ist, an die virtuelle Adresse des Mehrfachnetzknotens, und
- Weiterleiten der Nachricht an den Netzwerkknoten, was es dem Mehrfachnetzwerkknoten ermöglicht, Pakete effektiv an die richtige Netzwerkschnittstelle zu leiten und/oder den Ursprung der empfangenen Pakete zu identifizieren.

## Revendications

1. Appareil réseau, comprenant :
des circuits régulant un premier réseau, et les circuits sont configurés pour :
recevoir (102) des informations de routage provenant d'un noeud à réseaux multiples demandant de se connecter au premier réseau, dans lequel le noeud à réseaux multiples est déjà connecté à au moins un second réseau séparé du premier réseau ; lesdites informations de routage comprenant au moins l'une parmi : la deuxième plage d'adresses réseau et une adresse réseau attribuée au noeud de réseau dans l'au moins un second réseau ;
identifier (108), sur la base de l'analyse des informations de routage, un conflit d'adresses entre une première plage d'adresses réseau du premier réseau et une deuxième plage d'adresses réseau de l'au moins un second réseau ;
attribuer une adresse provenant d'une première plage d'adresses réseau du premier réseau au noeud à réseaux multiples sans transmettre l'adresse au noeud à réseaux multiples ;
attribuer (116) une adresse de réseau virtuel au noeud à réseaux multiples dans une troisième plage d'adresses réseau allouée à un sous-réseau virtuel établi sur le premier réseau qui n'est pas en conflit avec la deuxième plage d'adresses réseau ; et
transmettre (120) l'adresse de réseau virtuel au noeud à réseaux multiples ;
dans lequel les circuits sont configurés pour attribuer (118) une autre adresse de réseau virtuel dans la troisième plage d'adresses réseau à au moins un autre noeud de réseau connecté au premier réseau ;
dans lequel l'adresse de réseau virtuel attribuée n'est pas transmise à l'au moins un autre noeud ;
dans lequel les circuits sont configurés pour réguler le trafic réseau transmis par le noeud à réseaux multiples vers l'au moins un autre noeud de réseau en effectuant les opérations suivantes pour chaque message transmis :
- l'interception du message transmis par le noeud à réseaux multiples ;
- l'ajustement d'une adresse source du message comprenant l'adresse virtuelle du noeud à réseaux multiples à ladite adresse réseau attribuée au noeud à réseaux multiples dans la première plage d'adresses,
- l'ajustement d'une adresse de destination du message comprenant l'adresse virtuelle de l'au moins un autre noeud de réseau à une adresse réseau de l'au moins un autre noeud de réseau dans la première plage d'adresses, et
- la transmission du message à l'au moins un autre noeud de réseau ;
dans lequel les circuits sont configurés pour réguler le trafic réseau transmis au noeud à réseaux multiples par l'au moins un autre noeud de réseau en effectuant les opérations suivantes pour chaque message transmis :
- l'interception du message transmis par l'au moins un autre noeud de réseau ;
- l'ajustement d'une adresse source du message comprenant une adresse réseau de l'au moins un autre noeud de réseau dans la première plage d'adresses à l'adresse virtuelle attribuée à l'au moins un autre noeud de réseau dans la troisième plage d'adresses,
- l'ajustement d'une adresse de destination du message comprenant une adresse réseau attribuée au noeud à réseaux multiples dans la première plage d'adresses à l'adresse virtuelle du noeud à réseaux multiples, et
- la transmission du message au noeud de réseau, permettant ainsi au noeud à réseaux multiples de diriger efficacement les paquets vers l'interface réseau correcte et/ou d'identifier l'origine des paquets reçus.

2. Appareil selon l'une quelconque des revendications précédentes, comprenant également le mappage de réseau comprenant une adresse de réseau virtuelle préférée déterminée par le noeud à réseaux multiples qui n'est pas en conflit avec l'adresse réseau attribuée au noeud à réseaux multiples dans l'au moins un second réseau.

3. Appareil selon l'une quelconque des revendications précédentes, dans lequel les circuits reçoivent les informations de routage du noeud à réseaux multiples dans au moins l'un des éléments suivants :
- au moins un message de diffusion transmis sur le premier réseau par le noeud à réseaux multiples,
- au moins un message de multidiffusion transmis sur le premier réseau par le noeud à réseaux multiples,
- au moins un message transmis par le noeud à réseaux multiples selon au moins une extension du Dynamic Host Configuration Protocol, DHCP,
- au moins un message transmis par le noeud à réseaux multiples selon au moins un protocole de négociation utilisé entre le noeud à réseaux multiples et les circuits.

4. Appareil selon l'une quelconque des revendications précédentes, dans lequel l'adresse réseau et l'adresse virtuelle sont des adresses IP, Internet Protocol.

5. Appareil selon l'une quelconque des revendications précédentes, dans lequel les circuits sont également configurés pour configurer la troisième plage d'adresses réseau en utilisant une plage d'adresses IPv6.

6. Appareil selon l'une quelconque des revendications précédentes, dans lequel les circuits sont également configurés pour créer (114) une pluralité de sous-réseaux virtuels pour une pluralité de noeuds de réseau demandant à se connecter au premier réseau, chaque sous-réseau virtuel étant créé pour un noeud respectif parmi la pluralité de noeuds de réseau, qui est connecté à au moins un autre réseau ayant une plage d'adresses réseau qui est en conflit avec la première plage d'adresses.

7. Appareil selon l'une quelconque des revendications précédentes, dans lequel le premier réseau et le second réseau sont constitués d'au moins un réseau physique et/ou d'au moins un réseau virtuel et chacun de la pluralité de noeuds de réseau est un noeud de réseau physique ou un noeud de réseau virtuel.

8. Appareil selon la revendication 7, dans lequel les circuits exécutent au moins un commutateur virtuel pour réguler l'au moins un réseau virtuel.

9. Appareil selon l'une quelconque des revendications précédentes, dans lequel les circuits sont également configurés pour fournir au moins un service de découverte d'adresses réseau au noeud à réseaux multiples.

10. Procédé mis en œuvre par ordinateur pour créer un sous-réseau virtuel pour un noeud à réseaux multiples connecté à une pluralité de réseaux, comprenant :
la réception (104) des informations de routage provenant d'un noeud à réseaux multiples demandant de se connecter au premier réseau, dans lequel le noeud à réseaux multiples est déjà connecté à au moins un second réseau séparé du premier réseau ; lesdites informations de routage comprenant au moins l'une parmi : la deuxième plage d'adresses réseau et une adresse réseau attribuée au noeud de réseau dans l'au moins un second réseau ;
l'identification (108), sur la base de l'analyse des informations de routage, d'un conflit d'adresses entre une première plage d'adresses réseau du premier réseau et une deuxième plage d'adresses réseau de l'au moins un second réseau ;
l'attribution d'une adresse provenant d'une première plage d'adresses réseau du premier réseau au noeud à réseaux multiples sans la transmission de l'adresse au noeud à réseaux multiples ;
l'attribution (116) d'une adresse de réseau virtuel au noeud à réseaux multiples dans une troisième plage d'adresses réseau allouée à un sous-réseau virtuel établi sur le premier réseau qui n'est pas en conflit avec la deuxième plage d'adresses réseau ; et
la transmission (120) de l'adresse de réseau virtuel au noeud à réseaux multiples ;
dans lequel une autre adresse réseau virtuelle dans la troisième plage d'adresses réseau est attribuée (118) à au moins un autre noeud de réseau connecté au premier réseau ;
dans lequel l'adresse de réseau virtuel attribuée n'est pas transmise à l'au moins un autre noeud ;
dans lequel le procédé comprend également la régulation du trafic réseau transmis par le noeud à réseaux multiples vers l'au moins un autre noeud de réseau par, pour chaque message transmis :
- l'interception du message transmis par le noeud à réseaux multiples ;
- l'ajustement d'une adresse source du message comprenant l'adresse virtuelle du noeud à réseaux multiples à ladite adresse réseau attribuée au noeud à réseaux multiples dans la première plage d'adresses,
- l'ajustement d'une adresse de destination du message comprenant l'adresse virtuelle de l'au moins un autre noeud de réseau à une adresse réseau de l'au moins un autre noeud de réseau dans la première plage d'adresses, et
- la transmission du message à l'au moins un autre noeud de réseau ;
dans lequel le procédé comprend également la régulation du trafic réseau transmis au noeud à réseaux multiples par l'au moins un autre noeud de réseau par, pour chaque message transmis :
- l'interception du message transmis par l'au moins un autre noeud de réseau ;
- l'ajustement d'une adresse source du message comprenant une adresse réseau de l'au moins un autre noeud de réseau dans la première plage d'adresses à l'adresse virtuelle attribuée à l'au moins un autre noeud de réseau dans la troisième plage d'adresses,
- l'ajustement d'une adresse de destination du message comprenant une adresse réseau attribuée au noeud à réseaux multiples dans la première plage d'adresses à l'adresse virtuelle du noeud à réseaux multiples, et
- la transmission du message au noeud de réseau, permettant ainsi au noeud à réseaux multiples de diriger efficacement les paquets vers l'interface réseau correcte et/ou d'identifier l'origine des paquets reçus.
